Europäisches Patentamt

European Patent Office

Office européen des brevets

(11) Veröffentlichungsnummer: **0 322 426 B1**

(19)

(12) **EUROPÄISCHE PATENTSCHRIFT**

(45) Veröffentlichungstag der Patentschrift: **11.11.92**

(21) Anmeldenummer: **88904923.5**

(22) Anmeldetag: **11.06.88**

(86) Internationale Anmeldenummer:
**PCT/DE88/00353**

(87) Internationale Veröffentlichungsnummer:
**WO 89/00243 (12.01.89 89/02)**

(51) Int. Cl.⁵: **F02M 45/06**, F02M 41/06,
F02M 59/36

(54) **KRAFTSTOFFEINSPRITZPUMPE.**

(30) Priorität: **06.07.87 DE 3722265**

(43) Veröffentlichungstag der Anmeldung:
**05.07.89 Patentblatt 89/27**

(45) Bekanntmachung des Hinweises auf die
Patenterteilung:
**11.11.92 Patentblatt 92/46**

(84) Benannte Vertragsstaaten:
**DE FR GB IT**

(56) Entgegenhaltungen:
**EP-A- 0 024 803**
**EP-A- 0 070 558**
**EP-A- 0 116 168**
**DE-A- 3 617 786**
**FR-A- 2 536 464**

(73) Patentinhaber: **ROBERT BOSCH GMBH**
**Postfach 30 02 20**
**W-7000 Stuttgart 30(DE)**

(72) Erfinder: **BRUNEL, André**
**La Colinière 2, route de Vourles**
**F-69230 S.-Genis Laval(FR)**

Rank Xerox (UK) Business Services

# Beschreibung

## Stand der Technik

Die Erfindung geht von einer Kraftstoffeinspritzpumpe für Brennkraftmaschinen gemäß der Gattung des Patentanspruchs 1 aus. Bei einer solchen durch die EP-A 0 024 803 bekannten Einspritzpumpe sind die elektrisch betätigten Ventile als Drehschieberventile ausgeführt, wobei zur Realisierung einer gesteuerten Voreinspritzung insgesamt zwei Drehschieberventile notwendig sind. Die Drehschieber weisen dabei Nocken unterschiedlicher Breite auf und sind so einander zugeordnet, daß einer der Drehschieber grundsätzlich das Ende der Kraftstoffeinspritzung steuert und zugleich durch Schließen einer Entlastungsleitung des Pumpenarbeitsraums die Steuerung von Voreinspritzmenge und Haupteinspritzmenge erlaubt. Die Voreinspritzmenge wird durch einen synchron zu diesem Drehschieber angetriebenen Drehschieber gesteuert. Wobei der die Voreinspritzmenge steuernde Drehschieber einen Nocken definierter Breite aufweist, der eine Entlastungsleitung des Pumpenarbeitsraums zusteuert und somit durch seine Breite die Menge der Voreinspritzung festlegt. Ein in Reihe dazu liegender Drehschieberteil steuert dann in der Folge die Haupteinspritzung mit Hilfe eines entsprechenden Nockens, der nach dem Wiederöffnen des stromaufwärts liegenden Drehschieberteils für die Voreinspritzung die Entlastungsleitung des Pumpenarbeitsraumes verschließt. Diese Anordnung mit den kontinuierlich angetriebenen Drehschiebern ist sehr aufwendig und bedingt eine sehr exakte und synchrone Steuerung. Insbesondere befinden sich die Drehschieberteile für Steuerung der Voreinspritzung und die Steuerung der Haupteinspritzung in fester Zuordnung zueinander und erlauben somit keine parameterabhängige Variation der Zuordnung.

Durch die DE-A-36 17 786 ist weiterhin eine Kraftstoffeinspritzpumpe bekannt mit einer Kraftstoffentnahmevorrichtung für eine Teilmenge des vom Pumpenkolben verdrängten Kraftstoffs. Bei dieser Anordnung werden jedoch sowohl der Spritzbeginn der Voreinspritzung als auch die Unterbrechung der Kraftstoffeinspritzung zwischen Voreinspritzung und Haupteinspritzung sowie das Ende der Haupteinspritzung durch ein einziges Magnetventil gesteuert. Dieses steuert dabei einen Entlastungskanal eines Druckraumes, der von einem Ausweichkolben begrenzt wird, der andererseits vom Druck des Pumpenarbeitsraumes beaufschlagt wird. Durch Öffnen oder Schließen des Magnetventils wird eine Ausweichbewegung des Ausweichkolbens gesteuert und somit die Entnahme von Kraftstoff aus dem Pumpenarbeitsraum nach Zeit und Menge. Dies bedingt jedoch ein sehr schnelles und exaktes Schalten des Ventils, was mit hohem technischen Aufwand verbunden ist. Zudem hat die bekannte Einrichtung auch den Nachteil, daß beim Wiederschließen des Ventils nach einer Spritzpause zwischen Vor- und Haupteinspritzung es zu einem schwingenden Verhalten des Ausweichkolbens in Verbindung mit der Elastizität des Druckraumes kommen kann. Dies beeinflußt die Genauigkeit der Kraftstoffeinspritzung wesentlich.

Bei anderen, durch die DE-A-29 03 482 bekannten Kraftstoffeinspritzpumpen wird die während des Förderhubs des Pumpenkolbens zu der Einspritzdüse geförderte Kraftstoffmenge während einer einzigen Öffnungsphase der Einspritzdüse in den Zylinder der Brennkraftmaschine eingespritzt. Die Förderdauer und damit die eingespritzte Kraftstoffmenge wird durch den Schließ- und den Öffnungszeitpunkt des elektrischen Schaltventils bestimmt. Mit Schließen des Schaltventils wird der Pumpenarbeitsraum abgeschlossen, so daß sich mit dem Pumpenkolbenhub der Förderdruck aufbaut, und mit Öffnen des Schaltventils wird der Pumpenarbeitsraum mit einem Entlastungsraum verbunden, wodurch der Druck im Pumpenarbeitsraum schlagartig abfällt, die Einspritzdüse schließt und damit die Einspritzung beendet ist.

Bei Dieselmotoren verursacht diese sog. Direkteinspritzung insbesondere bei Leerlauf und niedrigen Drehzahlen durch die schlagartige Verbrennung des eingespritzten Gemisches erhebliche Geräuschprobleme. Eine merkliche Geräuschminderung wird jedoch durch Aufteilung der Kraftstoffeinspritzmenge auf eine kleinere Voreinspritzmenge und eine von der Drehzahl und Last der Brennkraftmaschine abhängige Haupteinspritzmenge erzielt,

## Vorteile der Erfindung

Die erfindungsgemäße Kraftstoffeinspritzpumpe mit den kennzeichnenden Merkmalen des Patentanspruchs 1 hat den Vorteil, neben der konstruktiv einfachen Steuerung von Förderbeginn und Förderende mittels eines elektrischen Schaltventils auch die Aufteilung der Vor- und Haupteinspritzmenge in einfacher Weise zu erreichen. Sowohl Förderende als auch die Dauer und der Zeitpunkt der Vor- und Haupteinspritzung lassen sich jederzeit ohne konstruktiven Eingriff ändern und somit leicht an vorgegebene Parameter, wie Drehzahl, Förderdruck und Nadelhub der Einspritzdüse, anpassen. Die erfindungsgemäße Kraftstoffeinspritzpumpe zeichnet sich durch geringes Bauvolumen und leichte Austauschbarkeit der Schaltventile aus. Für beide Schaltventile kann der gleiche Ventiltyp verwendet werden.

Durch die in den weiteren Ansprüchen aufgeführten Maßnahmen sind vorteilhafte Weiterbildungen und Verbesserungen der im Anspruch 1 angegebenen Kraftstoffeinspritzpumpe möglich.

Bei den Ausführungsformen der Erfindung gemäß den Ansprüchen 2 - 7 besteht die Möglichkeit, den Zeitabstand zwischen dem Ende der Voreinspritzung und dem Anfang der Haupteinspritzung extrem klein zu machen, da keines der beiden Schaltventile aufeinanderfolgend umgesteuert wird. d.h. nach einer Schließbewegung sofort eine Öffnungsbewegung oder umgekehrt ausführen muß. Der Zeitpunkt des Beginns der Haupteinspritzung ist durch Vorgabe des Speicherkolbenhubs einstellbar, der z.B. mittels eines einstellbaren Hubanschlags justiert werden kann.

Bei den Ausführungsformen der Erfindung gemäß Anspruch 5 und 6 kann ein durch den Steuerraum für den Speicherkolben bedingtes Totvolumen sehr klein gehalten werden.

Eine vorteilhafte Ausführungsform der Erfindung ergibt sich auch aus Anspruch 8. Die direkte Entnahme eines Fördervolumens durch Schließen und Öffnen des zweiten Schaltventils ohne Verwendung eines Speicherraums mit vorgegebenem Speichervolumen ermöglicht eine Steuerung der Voreinspritzung ohne die Frequenz des die Förderdauer bestimmenden ersten Schaltventils zu beeinträchtigen. Die Voreinspritzung kann völlig unabhängig von der Haupteinspritzung und ohne Rückwirkung auf letztere eingestellt werden. Es kann sowohl für geringe Drehzahlen nur eine Voreinspritzung - also ohne nachfolgend sich anschließender Haupteinspritzung - als auch bei großen Drehzahlen eine Direkteinspritzung - also ohne Aufteilung der Kraftstoffeinspritzmenge in Vor- und Haupteinspritzung - durchgeführt werden. In erstem Fall wird nach Öffnen des zweiten Schaltventils zur Beendigung der Voreinspritzung dieses nicht wieder geschlossen, und im zweiten Fall wird das zweite Schaltventil synchron mit dem ersten Schaltventil angesteuert. In beiden Fällen bleibt die Schaltfrequenz des ersten Schaltventils, also der Zeitpunkt des Förderbeginns und der Zeitpunkt des Förderendes unbeeinflußt von der Festlegung der Voreinspritzung. Bei Ausfall eines der beiden Schaltventile kann zusätzlich ein Notstop durch Öffnen des intakten Schaltventils bewirkt werden.

## Zeichnung

Die Erfindung ist anhand von in der Zeichnung dargestellten Ausführungsbeispielen in der nachfolgenden Beschreibung näher erläutert. Es zeigen:

Fig. 1 ausschnittweise einen Längsschnitt einer Kraftstoffeinspritzpumpe der Verteilerbauart mit Radialkolben,

Fig. 2 ausschnittweise eine schematische Darstellung der Abwicklung einer Nokkenbahn der Kraftstoffeinspritzpumpe in Fig. 1 zur Verdeutlichung der Wirkungsweise,

Fig. 3 ein Diagramm des zeitlichen Verlaufs des Förderdrucks im Pumpenarbeitsraum der Kraftstoffeinspritzpumpe in Fig. 1,

Fig. 4 ausschnittweise einen Längsschnitt der Kraftstoffeinspritzpumpe gemäß einem weiteren Ausführungsbeispiel,

Fig. 5 einen Schnitt längs der Linie V-V in Fig. 4,

Fig. 6 ausschnittweise einen Längsschnitt der Kraftstoffeinspritzpumpe gemäß einem dritten Ausführungsbeispiel.

## Beschreibung der Ausführungsbeispiele

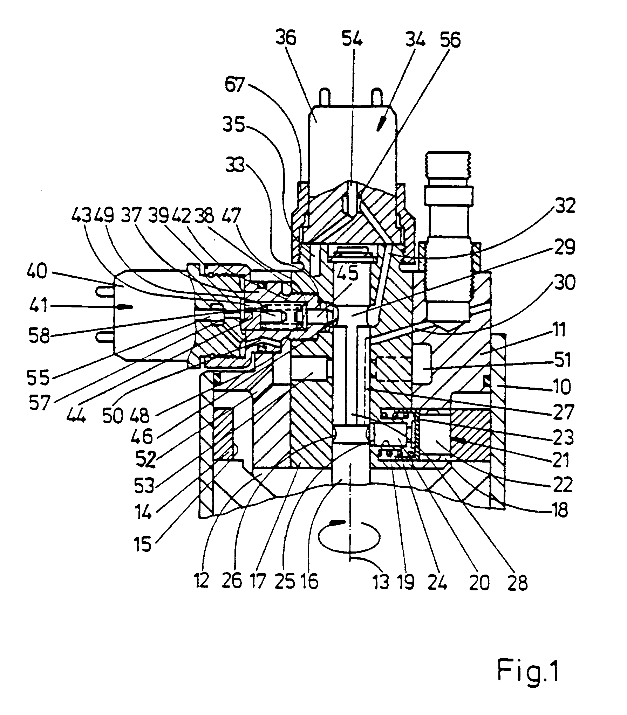

Die in Fig. 1 ausschnittweise im Längsschnitt dargestellte Verteilerkraftstoffeinspritzpumpe der Radialkolbenbauart weist ein topfförmiges Gehäuse 10 und einen diesen verschließenden Deckel 11 auf, der vom offenen Ende des Gehäuses 10 her eingeschoben ist und mit einem nicht dargestellten Boden des Gehäuses 10 einen Pumpeninnenraum 12 begrenzt. Der Pumpeninnenraum 12 ist mit unter niedrigem Druck stehenden Kraftstoff gefüllt und dient als Kraftstoffvorrats- und Entlastungsraum. Durch den Boden des Gehäuses 10 ist eine Antriebswelle 13 hindurchgeführt, welche in Fig. 1 durch ihre Achse angedeutet ist. Im Pumpeninnenraum 12 erweitert sich diese Antriebswelle 13 topfförmig und trägt längs ihres Randes einen mit ihr drehfest verbundenen Nockenring 14. Der Nockenring 14 weist auf seiner Innenseite eine Nockenbahn 15 mit radial nach innen gerichteten Nocken auf, die in Zahl und Folge an die Zahl und Folge von in der Kraftstoffeinspritzpumpe enthaltenen Radialkolben und an die Zahl der mit diesen Radialkolben pro Umdrehung der Antriebswelle 13 auszuführenden Kolbenhübe angepaßt sind. Auf der Antriebswelle 13 sitzt üblicherweise die nicht dargestellte Förderpumpe, die den Pumpeninnenraum 12 mit Kraftstoff füllt.

Mit der Antriebswelle 13 ist weiterhin ein Verteilerkolben 16 drehfest verbunden, dessen Achse mit der Achse der Antriebswelle 13 fluchtet. Der Verteilerkolben 16 ist bis auf das mit der Antriebswelle 13 verbundene Ende in einem Verteilerzylinder 17 geführt, der in einer zur Achse der Antriebswelle 13 koaxialen Bohrung des Deckels 11 gehalten ist. Der Verteilerkolben 16 ist in seiner axialen Lage im Verteilerzylinder 17 fixiert. Der Nockenbahn 15 benachbart, radial nach innen anschließend sind im Deckel 11 und im Verteilerzylinder 17 Führungen 18 vorgesehen, die über den Umfang gleichmäßig verteilt sind und bis nahe an den Verteilerkolben 17 reichen. Für eine in Fig. 1 dargestellte Verteilerkraftstoffeinspritzpumpe zur Versorgung von insgesamt drei Einspritzdüsen einer Brennkraftmaschine, insbesondere eines Dieselmotors, sind insgesamt drei Führungen 18 vorgesehen, von welchen in Fig. 1 nur eine zu sehen ist. Koaxial zu den Führungen 18 sind im Verteilerzylinder 17 radiale Durchgangsbohrungen 19 vorgesehen, in welchen jeweils ein Pumpenkolben 20 längsverschieblich geführt ist. In den Führungen 18 ist jeweils ein sog. Rollenstößel 21 längsverschieblich geführt, der aus einer Walze oder Rolle 22 und einer Stößeltasse 23 besteht. Eine am Boden der Stößeltasse 23 einerseits und im Grunde der Führung 18 am Verteilerzylinder 17 andererseits sich abstützende Stößelfeder 24 drückt die Stößeltasse 23 gegen die Rolle 22 und letztere an die Nockenbahn 15 des Nockenrings 14.

Jeder Pumpenkolben 20 begrenzt in der radialen Durchgangsbohrung 19 einen Pumpenarbeitsraum 25, dessen andere Stirnseite von einer Ringnut 26 auf dem Verteilerkolben 16 gebildet wird. In der Ringnut münden eine auf dem Verteilerkolben 16 sich axial erstreckende Verteilernut 27 und eine dazu parallel verlaufende Verbindungsnut 28. Letztere führt zu einer zweiten Ringnut 29, die im axialen Abstand von der ersten Ringnut 26 auf dem Verteilerkolben 16 vorgesehen ist. Im Innern des Verteilerzylinders 17 münden in einer Querschnittsebene Einspritzbohrungen 30, die über den Umfang des Verteilerzylinders 17 gleichmäßig verteilt sind und durch den Verteilerzylinder 17 und den Deckel 11 hindurch bis zu jeweils einer Einspritzdüse führen. Die axiale Länge der Verteilernut 27 ist so bemessen, daß sie bis in die Querschnittsebene der Mündungen der Einspritzbohrungen 30 hineinragt und damit je nach Drehstellung des Verteilerkolbens 16 eine der drei Einspritzbohrungen 30 mit der ersten Ringnut 26 verbindet. Im Bereich der zweiten Ringnut 29 münden im Innern des Verteilerzylinders 17 einerseits eine Zulaufbohrung 32 und andererseits eine radiale Stufenbohrung 33. Die Zulaufbohrung 32 ist mit einem Ventilanschluß 56 eines elektromagnetischen Schaltventils 34 verbunden, dessen anderer Ventilanschluß mit einer im Verteilerzylinder 17 bis in den Pumpeninnenraum 12 verlaufenden Abflußbohrung 35 verbunden ist. Das Ventilgehäuse 36 des ersten Schaltventils 34 ist dabei unter gleichzeitiger Abdichtung der Zylinderbohrung des Verteilerzylinders 17 auf die Stirnseite des Verteilerzylinders 17 aufgesetzt und dort mit einer Überwurfmutter 67 am Verteilerzylinder 17 verschraubt.

In die radiale Stufenbohrung 33 ist ein Gehäusekörper 37 mit einem Gewindezapfen 38 eingeschraubt, der auf seiner vom Gewindezapfen 38 abgekehrten Seite einen hohlzylindrischen Kragen 39 trägt, in dem das Ventilgehäuse 40 eines zweiten elektromagnetischen Schaltventils 41 eingeschraubt ist. Der Gehäusekörper 37 weist eine längsdurchgehende, sich auch über den Bereich des Gewindezapfens 38 erstreckende Stufenbohrung 42 auf, die an dem zu dem Ventilgehäuse 40 weisenden Ende durch einen mit einer Axialbohrung 43 versehenen Stopfen 44 verschlossen ist. In dem den kleineren Bohrungsdurchmeser aufweisenden Bohrungsabschnitt der Stufenbohrung 42 ist ein Speicherkolben 45 axial verschieblich geführt, der zusammen mit der zweiten Ringnut 29 im Verteilerkolben 16 einen Speicherraum 46 begrenzt. Der Speicherkolben 45 reicht bis in den den größeren Bohrungsdurchmesser aufweisenden Bohrungsabschnitt der Stufenbohrung 42 hinein und begrenzt hier mit einem Radialflansch 47 einen vom Stopfen 44 abgeschlossenen Steuerraum 48 für den Speicherkolben 45. Der Speicherkolben 45 ist durch eine Rückstellfeder 49, die sich einerseits am Stopfen 44 und andererseits am Radialflansch 47 abstützt in seiner in Fig. 1 gezeichneten Grundstellung vorgespannt, in welcher das Speichervolumen des Speicherraums 46 minimal und bis auf ein geringes Totvolumen gleich Null ist. Die als Schraubendruckfeder ausgebildete Rückstellfeder 49 sitzt auf einem mit dem Stopfen 44 einstückigen Führungszapfen, der zugleich einen Hubanschlag 58 für den Speicherkolben 45 bildet. Durch mehr oder weniger starkes Eindrehen des Stopfens 44 - nach Abnehmen des Schaltventils - kann der maximale Hub des Speicherkolbens 45 und damit der Beginn der Haupteinspritzung eingestellt werden. Der Steuerraum 48 steht über die Axialbohrung 43 mit dem einen Ventilanschluß des zweiten Schaltventils 41 in Verbindung. Der andere Ventilanschluß ist über eine im Ventilgehäuse 40 verlaufende Verbindungsbohrung 50 mit einer den Verteilerzylinder 17 umschließenden Ringnut 51 im Deckel 11 verbunden, die ihrerseits über eine Schrägbohrung 52 an dem Pumpeninnenraum 12 angeschlossen ist. Im Bereich der Ringnut 51 sind im Verteilerzylinder 17 drei am Umfang gleichmäßig verteilte Füllbohrungen 53 angeordnet, über welche der Pumpenarbeitsraum 25 während des Saughubs eines der Pumpenkolben 20 immer dann gefüllt werden kann, wenn die Verbindungsnut 28 zwischen der ersten und zweiten Ringnut 29,34 auf dem Verteilerkolben 16 eine dieser Füllbohrungen 53 überdeckt. Die beiden Schaltventile 34,41 sind identisch ausgebildet. Sie steuern jeweils mit einem von einem Elektromagneten betätigten Ventilglied 54 bzw. 55 eine Ventilöffnung 56 bzw. 57, über welche jeweils die beiden Ventilanschlüsse miteinander in Verbindung stehen. Aufbau und Wirkungsweise der Schaltventile 34,41 sind ausführlich in der DE-A-35 23 536 beschrieben.

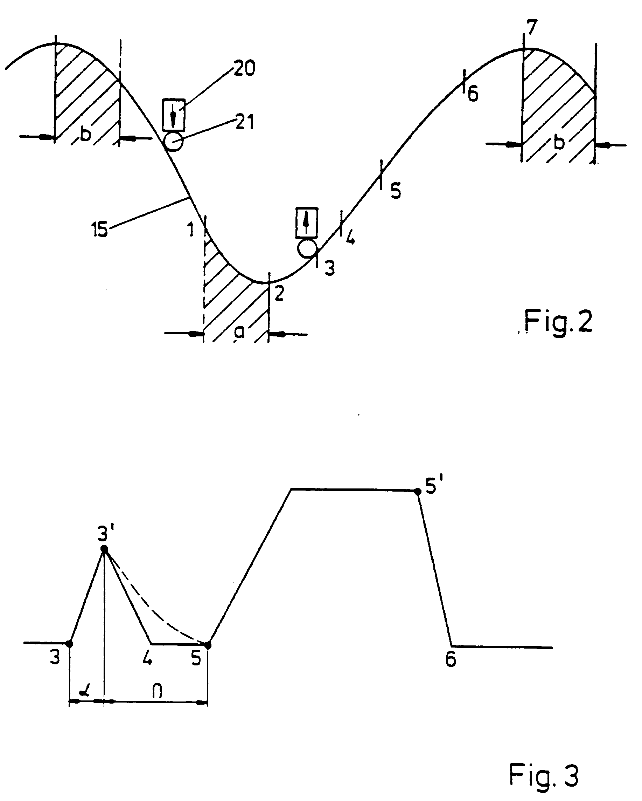

Die Funktionsweise der vorstehend beschriebenen Kraftstoffeinspritzpumpe ist nachfolgend unter Einbeziehung der Fig. 2 und 3 erläutert, wobei in Fig. 2 schematisch und ausschnittweise eine Abwicklung der Nockenbahn 15 dargestellt ist, die einen Saughub und Förderhub des Pumenkolbens 20 bewirkt. In Fig. 3 ist der zeitliche Verlauf des während des Förderhubs des Pumpenkolbens 20 im Pumpenarbeitsraum auftretenden Förderdruckes dargestellt.

Auf der abfallenden Flanke der Nockenbahn 15, an welcher der Rollenstößel 21 anliegt, wird der entsprechende Pumpenkolben 20 in Fig. 1 nach außen bewegt. Die Verbindungsnut 28 überdeckt eine Füllbohrung 53 und der Pumpenarbeitsraum 25 wird aus dem Pumpeninnenraum 12 über die Schrägbohrung 52, die Ringnut 51, die Füllbohrung 53, die Verbindungsnut 28 und die Ringnut 26 mit Kraftstoff gefüllt. Der Speicherkolben 45 nimmt spätestens dann, wenn der Rollenstößel 21 am Punkt 1 auf der Nockenbahn 15 angelangt ist, seine in Fig. 1 dargestellte Grundstellung ein, in welcher das Speichervolumen des Speicherraums 46 praktisch Null ist. Im Bereich a zwischen dem Punkt 1 und dem Punkt 2 auf der Nockenbahn 15 wird das zweite Schaltventil 41 geschlossen. Die Ansteuerung der Schaltventile 34,41 erfolgt dabei über eine nicht dargestellte Steuereinrichtung. Gelangt der Rollenstößel 21 über den Punkt 2, dem unteren Totpunkt des Pumpenkolbens 20, hinaus in den Bereich der ansteigenden Flanke der Nockenbahn 15, so setzt der Förderhub des Pumpenkolbens 20 ein. Hat der Rollenstößel 21 Punkt 3 erreicht, so wird das erste Schaltventil 34 geschlossen. Nunmehr wird mit ansteigendem Förderdruck (vergl. Fig. 3) Kraftstoff über die erste Ringnut 26, die Verteilernut 27 und die momentan angeschlossene Einspritzbohrung 30 zu einer Einspritzdüse gefördert und gelangt dort zur Einspritzung. Der gleiche Förderdruck im Pumpenarbeitsraum 25 steht über die erste Ringnut 26, die Verbindungsnut 28 und die zweite Ringnut 29 am Speicherkolben 45 an. Durch das geschlossene zweite Schaltventil 41 und des dadurch abgeschlossenen kraftstoffgefüllten Steuerraums 48 ist der Speicherkolben 45 verriegelt, so daß der Förderdruck diesen nicht zurückzuschieben vermag.

Zum Zeitpunkt 3' (Fig. 3) wird die Erregung des zweiten Schaltventils 41 abgeschaltet. Dieses öffnet, wodurch der Steuerraum 48 über die Axialbohrung 43, die Verbindungsbohrung 50, die Ringnut 51 und die Schrägbohrung 52 mit dem Pumpeninnenraum 12 verbunden ist. Der am Speicherkolben 45 anstehende Förderdruck verschiebt den Speicherkolben unter zunehmender Freigabe des Speicherraums 46. Der Druck im Pumpeninnenraum 25 sinkt damit kontinuierlich ab. Zum Zeitpunkt 4, in welcher der Rollenstößel den Punkt 4 der Nockenbahn erreicht hat, ist durch das zusätzliche Speichervolumen des Steuerraums 48 der Förderdruck im Pumpenarbeitsraum 25 unter den Öffnungsdruck der Einspritzdüse abgesunken, so daß diese schließt und die Voreinspritzung beendet ist. Der Bereich der Voreinspritzung zwischen den Stellungen 3 und 4 des Rollenstößels 21 bzw. des Pumpenkolbens 20 relativ zur Nockenbahn 15 ist in Fig. 2 durch stärkere Strichführung hervorgehoben. Eine weitere Einwärtsbewegung des Pumpenkolbens auf der ansteigenden Flanke der Nockenbahn 15 vom Punkt 4 bis zum Punkt 5 bringt keine Förderdruckerhöhung, da der Speicherkolben 45 zunehmend ausweicht und damit das an dem Pumpenarbeitsraum 25 angeschlossene zusätzliche Speichervolumen vergrößert. Hat der Rollenstößel 21 und damit der Pumpenkolben 20 Punkt 5 auf der Nockenbahn 15 erreicht, so gelangt der Speicherkolben 45 an seinen Hubanschlag 58, der dessen Verschiebebewegung beendet. Der Förderdruck steigt nunmehr wieder über den Öffnungsdruck der Einspritzdüse an und zum Zeitpunkt 5 (Fig. 3) wird wieder Kraftstoff über die Einspritzdüse in den Zylinder der Brennkraftmaschine eingespritzt. Im Zeitpunkt 5' fällt die Ansteuerung des ersten Schaltventils 34 weg, wodurch dieses öffnet. Damit wird der Pumpenarbeitsraum 25 über die erste Ringnut 26, die Verbindungsnut 28, die zweite Ringnut 29, die Zulaufbohrung 32 und die Abflußbohrung 35 mit dem Pumpeninnenraum 12 verbunden und dadurch der Pumpenarbeitsraum 25 schlagartig entlastet. Der Förderdruck sinkt extrem schnell bis unter den Öffnungsdruck der Einspritzdüse ab, die zum Zeitpunkt 6 (Fig. 3) schließt, in welcher der Rollenstößel 21 bzw. der Pumpenkolben 20 den Punkt 6 auf der Nockenbahn 15 erreicht hat (Fig. 2). Der Bereich der Haupteinspritzung zwischen den Stellungen 5 und 6 des Rollenstößels 21 bzw. des Pumpenkolbens 20 relativ zur Nockenbahn 15 ist in Fig. 2 durch stärkere Strichführung hervorgehoben Im Punkte 7 hat der Pumpenkolben 20 seinen oberen Totpunkt erreicht, so daß nunmehr seine Bewegungsrichtung umkehrt und er auf der abfallenden Flanke der Nockenbahn 15 wieder einen Saughub ausführt. Im Bereich b der Nockenbahn (Fig. 2) ist der Druck im Pumpenarbeitsraum 25 und damit in der zweiten Ringnut 29 soweit abgesunken, daß die Rückstellfeder 49 den Kolben in seine in Fig. 1 dargestellte Grundstellung zurückschiebt.

Durch Ausbildung der den Steuerraum 48 mit dem Ventilanschluß des zweiten Schaltventils 41 verbindenden Axialbohrung 43 als Drossel oder durch Vorsehen einer Drossel an irgendeiner Stelle zwischen dem Steuerraum 48 und dem Pumpeninnenraum 12, z.B. in der im Gehäusekörper 37 verlaufenden Verbindungsbohrung 50, kann der Kraftstoffabfluß aus dem Steuerraum 48 so gedrosselt werden, daß die Abnahme des Förderdrucks nach Öffnen des zweiten Schaltventils 41 im Zeitpunkt 3' (Fig. 3) einen gewünschten Verlauf annimmt, wie dies z.B. in Fig. 3 strichliniert dargestellt ist (vergl. dort Bereich β ).

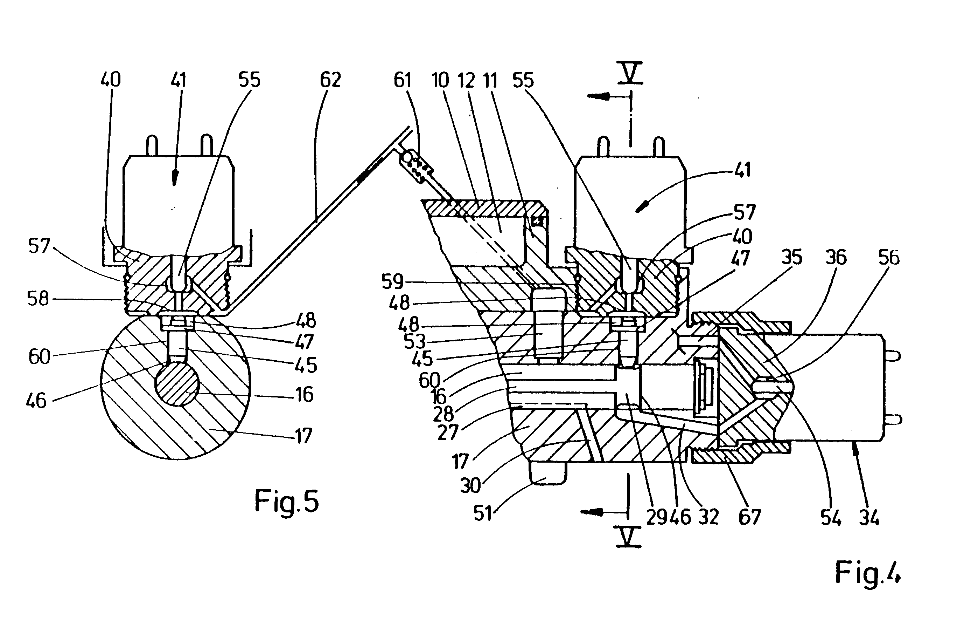

Bei der in Fig. 4 und 5 dargestellten modifizierten Ausführungsform der Verteilerkraftstoffeinspritzpumpe ist der Speicherraum 46 und Steuerraum 48 umschließende Gehäusekörper 37 weggefallen und das zweite Schaltventil 41 mit seinem Ventilgehäuse 40 unmittelbar in eine radiale, bis zum Verteilerzylinder 17 reichende Gewindebohrung 59 im Deckel 11 eingeschraubt. Der wiederum einen Radialflansch 47 tragende Speicherkolben 45 ist unmittelbar in einer radialen Stufenbohrung 60 im Verteilerzylinder 17 verschiebbar gelagert, die in der zweiten Ringnut 29 auf dem Verteilerkolben 16 mündet. Der den größeren Bohrungsdurchmesser aufweisende Bohrungsabschnitt der Stufenbohrung 60 bildet den Steuerraum 48, während der den kleineren Durchmesser aufweisende Bohrungsabschnitt der Stufenbohrung 60 bei Verschieben des Speicherkolbens 45 den Speicherraum 46 freigibt. Die in Fig. 1 zu sehende Rückstellfeder 49 ist entfallen. Die Rückstellung des Speicherkolbens 45 während des Saughubs des Pumpenkolbens 20 ist hier dadurch sichergestellt, daß der im Steuerraum 48 herrschende Druck auf den Speicherkolben 45 eine größere Verschiebekraft ausübt als der im Pumpenarbeitsraum 25 und damit in der zweiten Ringnut 29 herrschende Fülldruck. Dies kann entweder durch eine entsprechende Ausbildung der den Steuerraum 48 einerseits und den Speicherraum 46 andererseits begrenzenden Kolbenflächen des Speicherkolbens 45 oder durch entsprechende Ventilmittel zwischen dem Pumpeninnenraum 12 und dem zweiten Schaltventil 41 und/oder dem Pumpeninnenraum 12 und der Ringnut 51 im Deckel 11 realisiert werden. In dem Ausführungsbeispiel in Fig. 4 und 5 sind diese Ventilmittel schematisch durch ein Druckreduzierventil 61 angedeutet, das den Pumpeninnenraum 12 mit der Ringnut 51 verbindet, während das zweite Schaltventil 41 über eine mit 62 angedeutete Zulaufleitung unmittelbar mit dem Pumpeninnenraum 12 verbunden ist. Dieses Druckreduzierventil 61 stellt während des Saughubs des Pumpenkolbens einen Kraftstoffdruck im Steuerraum 48 sicher, der den Fülldruck im Pumpenarbeitsraum 25 übersteigt, so daß der Speicherkolben 45 zuverlässig in seine in Fig. 4 und 5 dargestellte Grundstellung zurückgestellt wird. Im übrigen unterscheiden sich Aufbau und Wirkungsweise dieser Verteilerkraftstoffeinspritzpumpe nicht von der in Fig. 1, so daß hier für gleiche Bauteile gleiche Bezugszeichen verwendet worden sind.

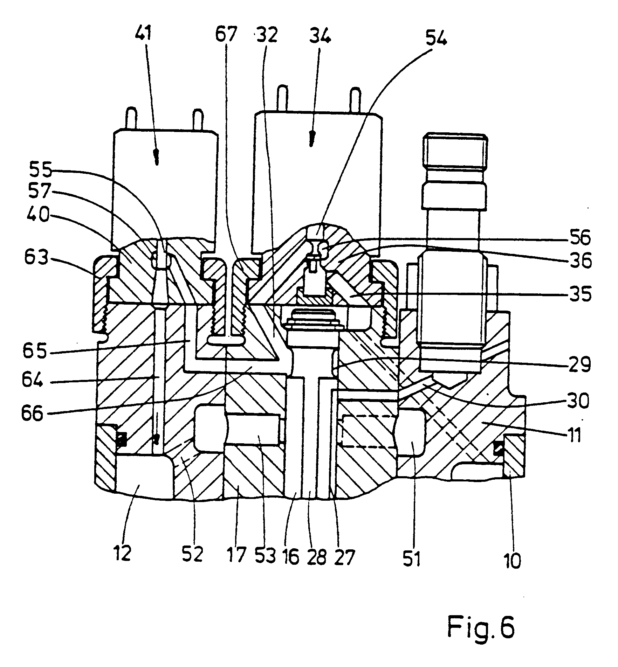

Bei dem in Fig. 6 ausschnittweise und im Längsschnitt dargestellten weiteren Ausführungsbeispiel der Verteilerkraftstoffeinspritzpumpe ist der Speicherraum 46 mit Speicherkolben 45 und Steuerraum 48 völlig entfallen. Die Entnahme des Kraftstoffvolumens während des Förderhubs des Pumpenkolbens 20 zur Beendigung der Voreinspritzung wird unmittelbar durch Öffnen und Schließen des zweiten Schaltventils 41 bewirkt. Das zweite Schaltventil 41 ist mittels einer Überwurfmutter 63 auf einem ein Außengewinde tragenden Vorsprung des Deckels 11 aufgeschraubt. Sein einer Ventilanschluß ist über eine im Deckel 11 verlaufende erste Bohrung 64 mit dem Pumpeninnenraum 12 verbunden. Sein anderer Ventilanschluß ist über eine im Deckel 11 verlaufende zweite Bohrung 65 und eine radiale Durchgangsbohrung 66 im Verteilerzylinder 17 mit der zweiten Ringnut 29 auf dem Verteilerkolben 16 verbunden. Der übrige konstruktive Aufbau der Verteilerkraftstoffeinspritzpumpe entspricht der in Fig. 1.

Die Wirkungsweise der Kraftstoffeinspritzpumpe gemäß Fig. 6 ist im folgenden unter Einbeziehung der Fig. 2 und 3 kurz beschrieben:
Während des Saughubs ist das zweite Schaltventil 41 geschlossen. Zum Zeitpunkt 3 (Fig. 3) wird das erste Schaltventil 34 geschlossen. Die Voreinspritzung beginnt. Im Zeitpunkt 3′ wird das zweite Schaltventil 41 geöffnet. Der Förderdruck sinkt ab und im Zeitpunkt 4 schließt die Einspritzdüse infolge des Abfalls des Förderdrucks unter dem Öffnungsdruck der Einspritzdüse. Die Voreinspritzung ist beendet. Zum Zeitpunkt 5 wird das zweite Schaltventil 41 wieder geschlossen, so daß mit weiterem Förderhub des Pumpenkolbens 20 wieder Kraftstoff zur Einspritzdüse gefördert wird und dort zur Einspritzung gelangt. Im Zeitpunkt 5′ wird das erste Schaltventil 34 geöffnet und damit der Förderdruck schlagartig abgebaut. Im Zeitpunkt 6 ist die Haupteinspritzung beendet. Wie ohne weiteres ersichtlich, kann die Voreinspritzung ohne Beeinflussung der Haupteinspritzung verändert werden, lediglich durch Wahl des Öffnungs- und Schließzeitpunktes des zweiten Schaltventils 41. Ebenso ist ersichtlich, daß z.B. bei Leerlauf oder niedrigen Drehzahlen auf die Haupteinspritzung vollständig verzichtet werden kann, indem auf das Wiederschließen des zweiten Schaltventils 41 zum Zeitpunkt 5 verzichtet wird. Auch kann ohne weiteres für hohe Drehzahlen eine Direkteinspritzung vorgenommen werden, indem das zweite Schaltventil 41 synchron mit dem ersten Schaltventil 34 geschaltet wird, also beide Schaltventile 34,41 im Zeitpunkt 3 geschlossen und im Zeitpunkt 5′ geöffnet werden.

Die Erfindung ist nicht auf das vorstehend beschriebene Ausführungsbeispiel einer Verteilerkraftstoffeinspritzpumpe mit Radialkolben beschränkt. Sie kann in gleicher Weise bei Verteilerkraftstoffeinspritzpumpen mit Axialkolben, wie diese in der DE-A-35 11 492 beschrieben sind, oder bei als sog. Pumpedüsen ausgebildeten Kraftstoffeinspritzpumpen eingesetzt werden, wie diese in der DE-A-29 03 482 beschrieben sind.

**Patentansprüche**

1. Hochdruck-Kraftstoffeinspritzpumpe für Brennkraftmaschinen, mit mindestens einem einen Pumpenarbeitsraum (25) begrenzenden Pumpenkolben (20), der durch einen Nockenantrieb (13, 14) zur Ausführung eines Saug- und Förderhubes in eine hin- und hergehende Bewegung versetzt wird, bei der beim Saughub der Pumpenarbeitsraum (25) aus einem Kraftstoffvorratsraum, insbesondere einen Pumpeninnenraum (12) mit Kraftstoff gefüllt und beim Förderhub der Kraftstoff aus dem Pumpenarbeitsraum (25) zu einer angeschlossenen Einspritzdüse gefördert wird, mit einer eine Vor- und eine Haupteinspritzmenge während des Pumpenförderhubes steuernden Ventilanordnung (34, 41), die ein erstes elektrisch betätigtes Ventil (34) aufweist, das einerseits mit dem Pumpenarbeitsraum (25) und andererseits mit einem Entlastungsraum (12) verbunden ist und die ein zweites elektrisch gesteuertes Ventil (41) aufweist, das die Entnahme eines Kraftstoff- volumens aus dem Pumpenarbeitsraum (25) und damit die Beendigung der Voreinspritzung bewirkt, wobei die Beendigung der Entnahme des Kraftstoffvolumens den Beginn der Haupteinspritzung bewirkt, und mit einer Steuereinrichtung, die den Einspritzbeginn der Voreinspritzung durch Schließen eines der beiden Ventile während des geschlossenen Zustandes des anderen Ventiles steuert, die durch Öffnen des zweiten Ventiles (41) zur Entnahme des Kraftstoffvolumens das Ende der Voreinspritzung steuert und die durch Öffnen des ersten Ventiles (34) das Ende der Haupteinspritzung steuert, dadurch gekennzeichnet, daß das erste und das zweite elektrisch betätigte Ventil jeweils ein Schaltventil ist, dessen elektrischer Stellantrieb bei Spannungs- beaufschlagung das Schaltventil in eine erste Schaltstellung und bei unterbrochener Spannungversorgung das Schaltventil in eine zweite Schaltstellung bringt, und daß die Steuereinrichtung das erste Schaltventil (34) zur Auslösung der Voreinspritzung schließt.

2. Pumpe nach Anspruch 1, dadurch gekennzeichnet, daß mit dem Pumpenarbeitsraum (25) ein Speicherraum (46) in Verbindung steht, der von einem axial verschieblichen Speicherkolben (45) begrenzt ist, daß der Speicherkolben (45) mit seiner vom Speicherraum (46) abgekehrten Stirnfläche einen kraftstoffgefüllten Steuerraum (48) begrenzt, der über das zweite Schaltventil (41) mit dem Kraftstoffvorratsraum, vorzugsweise mit dem Pumpeninnenraum (12) in Verbindung steht.

3. Pumpen nach Anspruch 2, dadurch gekennzeichnet, daß im Steuerraum (48) ein den Hub des Speicherkolbens (45) begrenzender, vorzugsweise in seinem maximalen Axialabstand zum Speicherkolben (45) einstellbarer, Anschlag (58) vorgesehen ist.

4. Pumpe nach Anspruch 2 oder 3, dadurch gekennzeichnet, daß am Speicherkolben (45) eine Rückstellfeder (49) mit einer den Speicherkolben (45) in Richtung minimalen Speichervolumens des Speicherraums (46) verschiebenden Kraft angreift, die kleiner ist als die vom Förderdruck im Pumpenarbeitsraum (25) auf den Speicherkolben (45) ausgeübte Verschiebekraft.

5. Pumpe nach Anspruch 2 oder 3, dadurch gekennzeichnet, daß die Druckverhältnisse im Steuerraum (48) und im Speicherraum (46) und/oder die Ausbildung des Speicherkolbens (45) derart getroffen sind, daß der im Steuerraum (48) herrschende Kraftstoffdruck eine größere Verschiebekraft am Speicherkolben (45) hervorruft als der im Speicherraum (46) herrschende Fülldruck des Pumpenarbeitsraums (25).

6. Pumpe nach Anspruch 5, dadurch gekennzeichnet, daß Ventilmittel (61) vorgesehen sind, die einen gegenüber dem im Speicherraum (46) herrschenden Fülldruck höheren Kraftstoffdruck im Steuerraum (48) sicherstellen.

7. Pumpe nach einem der Ansprüche 2 - 6, dadurch gekennzeichnet, daß in der über das zweite Schaltventil (41) führenden Verbindung zwischen dem Steuerraum (48) und dem Kraftstoffvorratsraum, vorzugsweise Pumpeninnenraum (12), eine Drossel angeordnet ist.

8. Pumpe nach Anspruch 1, dadurch gekennzeichnet, daß das zweite elektrische Schaltventil (41) mit seinem einen Ventilanschluß mit dem Pumpenarbeitsraum (25) und mit seinem anderen Ventilanschluß mit einem Entlastungsraum, vorzugsweise den Pumpeninnenraum (12), in Verbindung steht und mit Beginn der Haupteinspritzung erneut schließt.

9. Pumpe nach einem der Ansprüche 2 - 8, dadurch gekennzeichnet, daß der als Radialkolben ausgebildete Pumpenkolben (20) und der Pumpenarbeitsraum (25) radial zur Achse einer Antriebswelle (13) angeordnet sind, daß der Nockenantrieb einen Nockenring (14) mit Nockenbahn (15) und einen zwischen Pumpenkolben (20) und Nockenbahn (15) angeordneten Rollenstößel (21) aufweist, wobei entweder der Nockenring (14) oder die Baueinheit aus Rollenstößel (21) und Pumpenkolben (20) synchron mit der Antriebswelle (13) umläuft, daß mit der Antriebswelle (13) ein sich in deren Achsrichtung erstreckender, in einem Verteilerzylinder (17) gleitender Verteilerkolben (16) drehfest verbunden ist, der mit einer Ringnut (26) die vom Pumpenkolben (20) abgekehrte Seite des Pumpenarbeitsraums (25) begrenzt, daß in der Ringnut (26) eine Verteilernut (27) mündet, die eine Mehrzahl von im Innern des Verteilerzylinders (17) in einer Querschnittsebene mündenden, zu je einer Einspritzdüse führenden Einspritzbohrungen (30) sukzessive mit der Ringnut (26) verbindet, daß der Verteilerkolben (16) eine über eine axiale Verbindungsnut (28) mit der Ringnut (26) verbundene zweite Ringnut (29) trägt, die zwei im Innern des Verteilerzylinders (17) vorhandene Öffnungen überdeckt, von denen die erste Öffnung über eine Abflußleitung (32) mit dem ersten Schaltventil (41) und die zweite Öffnung mit dem Speicherraum (46) oder über eine zweite Abflußleitung (65,66) mit dem zweiten Schaltventil (41) verbunden ist.

10. Pumpe nach Anspruch 9, dadurch gekennzeichnet, daß der Speicherraum (46) von einer mit der zweiten Öffnung koaxialen Radialbohrung (42) in einem Gehäusekörper (37) gebildet ist, der in einer damit koaxialen Radialbohrung (33) im Verteilerzylinder (17) eingeschraubt ist, und vorzugsweise daß das zweite Schaltventil (41) in dem Gehäusekörper (37) verschraubt ist.

11. Pumpe nach Anspruch 9, dadurch gekennzeichnet, daß der Speicherraum (46) von einer mit der zweiten Öffnung koaxialen Radialbohrung (60) im Verteilerzylinder (17) gebildet ist und daß das zweite Schaltventil (41) in einer mit der Radialbohrung (60) koaxialen Gewindebohrung (59) im Pumpengehäuse (11) eingeschraubt ist.

## Claims

1. High pressure fuel injection pump for internal combustion engines having at least one pump piston (20) bounding a pump working space (25), which pump piston (20) is caused by a cam drive (13, 14) to execute a suction stroke and delivery stroke in a reciprocating motion, in which the pump working space (25) is filled with fuel from a fuel storage space, in particular a pump internal space (12), during the suction stroke and the fuel is delivered from the pump working space (25) to an injection nozzle connected to it during the delivery stroke, having a valve arrangement (34, 41) controlling a pilot injection quantity and a main injection quantity during the pump delivery stroke, which valve arrangement (34, 41) has a first electrically actuated valve (34) which is connected to the pump working space (25), on the one hand, and to a relief space (12) on the other, and which has a second electrically controlled valve (41) which causes the extraction of a fuel volume from the pump working space (25) and, in consequence, the ending of the pilot injection, the ending of the extraction of the fuel volume causing the beginning of the main injection, and having a control device which controls the beginning of the pilot injection by closing one of the two valves during the closed condition of the other valve, which control device controls the end of the pilot injection by opening the second valve (41) to extract the fuel volume and which control device controls the end of the main injection by opening the first valve (34), characterised in that each of the first and the second electrically actuated valves is an on/off valve whose electrical setting drive brings the on/off valve into a first position when voltage is applied to it and brings the on/off valve into a second position when the voltage supply is interrupted, and that the control device closes the first valve (34) to initiate the pilot injection.

2. Pump according to Claim 1, characterised in that connected to the pump working space (25), there is a reservoir space (46) which is bounded by an axially displaceable reservoir piston (45), that the reservoir piston (45) bounds a fuel-filled control space (48) by means of its end remote from the reservoir space (46), which control space is connected via the second on/off valve (41) to the fuel storage space, preferably the pump internal space (12).

3. Pumps (sic) according to Claim 2, characterised in that a stop (58) limiting the stroke of the reservoir piston (45), and preferably having its maximum axial distance from the reservoir piston (45) adjustable, is provided in the control space (48).

4. Pump according to Claim 2 or 3, characterised in that a return spring (49) acts on the reservoir piston (45) with a force displacing the reservoir piston (45) in the direction of minimum reservoir volume of the reservoir space (46), the force being smaller than the displacement force exerted on the reservoir piston (45) by the delivery pressure in the pump working space (25).

5. Pump according to Claim 2 or 3, characterised in that the pressure relationships in the control space (48) and in the reservoir space (46) and/or the design of the reservoir piston (45) are arranged in such a way that the fuel pressure prevailing in the control space (48) causes a larger displacement force on the reservoir piston (45) than the filling pressure of the pump working space (25) prevailing in the reservoir space (46).

6. Pump according to Claim 5, characterised in that valve means (61) are provided which ensure a fuel pressure in the control space (48) which is higher than the filling pressure prevailing in the reservoir space (46).

7. Pump according to one of Claims 2-6, characterised in that a throttle is located in the connection leading, via the second on/off valve (41), between the control space (48) and the fuel storage space, preferably the pump internal space (12).

8. Pump according to Claim 1, characterised in that the second electrical on/off valve (41) is connected by one of its valve connections to the pump working space (25) and by its other valve connection to a relief space, preferably the pump internal space (12), and closes again with the beginning of the main injection.

9. Pump according to one of Claims 2-8, characterised in that the pump piston (20) designed as a radial piston and the pump working space (25) are located radially relative to the axis of a driving shaft (13), that the cam drive has a cam ring (14) with cam track (15) and a roller tappet (21) located between pump piston (20) and cam track (15), either the cam ring (14) or the sub-assembly consisting of roller tappet (21) and pump piston (20) rotating synchronously with the driving shaft (13), that a distributor spool (16) extending in the direction of the centre line of the driving shaft and sliding in a distributor cylinder (17) is torsionally connected to the driving shaft (13), an annular groove (26) of which distributor spool (16) bounds the side of the pump working space (25) remote from the pump piston (20), that emerging into the annular groove (26) there is a distributor groove (27) which successively connects to the annular groove (26) a plurality of injection holes (30) each leading to an injection nozzle and emerging in a cross-sectional plane within the distributor cylinder (17), that the distributor spool (16) carries a second annular groove (29) connected to the annular groove (26) via an axial connecting groove (28), which second annular groove (29) is located over two openings present within the distributor cylinder (17), of which the first opening is connected to the first on/off valve (41) via a drain conduit (32) and the second opening is connected to the reservoir space (46) or, via a second drain conduit (65, 66) to the second on/off valve (41).

10. Pump according to Claim 9, characterised in that the reservoir space (46) is formed by a radial hole (42), coaxial with the second opening, in a housing body (37) which is screwed into a radial hole (33) coaxial with it in the distributor cylinder (17) and preferably that the second on/off valve (41) is screwed into the housing body (37).

11. Pump according to Claim 9, characterised in that the reservoir space (46) is formed by a radial hole (60), coaxial with the second opening, in the distributor cylinder (17) and that the second on/off valve (41) is screwed into a threaded hole (59), coaxial with the radial hole (60), in the pump housing (11).

**Revendications**

1. Pompe d'injection de carburant à haute pression pour moteurs à combustion interne, avec au moins un piston de pompe (20) délimitant une chambre de travail de la pompe (25), piston qui est déplacé par un mécanisme d'entraînement à cames (13, 14) pour produire une course d'aspiration et une course de refoulement selon un mouvement de va et vient alternatif, pompe dans laquelle lors de la course d'aspiration de la chambre de travail de la pompe (25) se remplit de carburant à partir d'une chambre de réserve de carburant, en particulier une chambre intérieure de pompe (12) et lors de la course de refoulement le carburant est refoulé à partir de la chambre de travail de la pompe (25) vers un injecteur associé, avec une disposition de soupapes de commande (34, 41) commandant une quantité préinjectée et une quantité principale injectée, disposition qui présente une première soupape actionnée électriquement (34), qui est reliée d'une part à la chambre de travail de la pompe (25) et d'autre part à un espace de décharge (12) et qui présente une deuxième soupape de commande (41) commandée électriquement qui provoque la reprise d'un volume de carburant à partir de la chambre de travail de la pompe (25) et de cette façon assure la fin de la préinjection, tandis que la fin de la reprise du volume de carburant provoque le début de l'injection principale et avec un dispositif de commande, qui commande le début de la préinjection en fermant l'une des deux soupapes pendant que l'autre soupape est en position fermée, qui commande la fin de la préinjection par l'ouverture de la deuxième soupape (41) pour la reprise du volume de carburant et qui commande la fin de l'injection principale par l'ouverture de la première soupape (34), pompe à injection de carburant à haute pression caractérisée en ce que la première et la seconde soupapes actionnées électriquement sont des soupapes de commutation dont le servomoteur électrique met lors de l'application de la tension la soupape dans une première position de commutation et lors de la coupure de l'alimentation en tension met la soupape dans une seconde position de commutation et en ce que le dispositif de commande ferme la première soupape (34) pour déclencher la préinjection.

2. Pompe d'injection selon la revendication 1, caractérisée en ce qu'une chambre d'accumulation (46) est en liaison avec la chambre de travail de la pompe (25), chambre (46) qui est délimitée par un piston d'accumulation (45) se déplaçant axialement, en ce que le piston d'accumulation (45) délimite par sa face frontale tournée du côté opposé à la chambre d'accumulation (46) une chambre de commande (48) remplie de carburant, qui est en liaison par l'intermédiaire de la deuxième soupape (41) avec la chambre de réserve de carburant, de préférence avec la chambre intérieure de la pompe (12).

3. Pompe d'injection selon la revendication 3, caractérisée en ce que dans la chambre de commande (48), il est prévu une butée (58) limitant la course du piston d'accumulation (45), de préférence pouvant être réglée à la distance maximale axiale par rapport au piston d'accumulation (45).

4. Pompe d'injection selon la revendication 2 ou 3, caractérisée en ce que sur le piston d'accumulation (45) un ressort de rappel (49) vient en prise avec une force repoussant le piston d'accumulation (45) dans le sens du volume minimal d'accumulation de la chambre d'accumulation (46), force qui est plus petite que la force de poussée exercée par la pression de refoulement dans la chambre de travail de la pompe (25) sur le piston d'accumulation (45).

5. Pompe d'injection selon la revendication 2 ou 3, caractérisée en ce que les conditions de pression dans la chambre de commande (48) et dans la chambre d'accumulation (46) et/ou la configuration du piston d'accumulation (45) sont arrêtées de telle manière que la pression de carburant régnant dans la chambre de commande (48) provoque une force de poussée plus grande sur le piston d'accumulation (45) que la pression de remplissage de la chambre de travail de la pompe (25) régnant dans la chambre d'accumulation (46).

6. Pompe d'injection selon la revendication 6, caractérisée en ce qu'il est prévu des soupapes (61) qui assurent une pression de carburant dans la chambre de commande (48) plus élevée par rapport à la pression de remplissage régnant dans la chambre d'accumulation (46).

7. Pompe d'injection selon l'une des revendications 2 à 6, caractérisée en ce que l'on dispose un étranglement dans la liaison passant par la deuxième soupape (41) entre la chambre de commande (48) et la chambre de réserve de carburant, de préférence la chambre intérieure de la pompe (12).

8. Pompe d'injection selon la revendication 1, caractérisée en ce que la deuxième soupape de commande (41) est en liaison par l'un de ses raccordements avec la chambre de travail de la pompe (25) et par son autre raccordement avec une chambre de décharge, de préférence la chambre intérieure de la pompe (12) et se ferme à nouveau au début de l'injection principale.

9. Pompe d'injection selon l'une des revendications 2 à 8, caractérisée en ce que le piston de pompe (20) constitué comme un piston radial et la chambre de travail de la pompe (25) sont disposés radialement par rapport à l'axe d'un arbre d'entraînement (13), en ce que le mécanisme d'entraînement à cames présente un anneau à cames (14) avec une piste à cames (15) et un poussoir à galets (21) disposé entre le piston de la pompe (20) et la piste à cames (15), tandis que soit l'anneau à cames (14), soit l'unité se composant du poussoir à galets (21) et du piston de pompe (20) tourne en synchronisme avec l'arbre d'entraînement (13), en ce qu'un piston de distribution (16), s'étendant dans le sens axial de l'arbre d'entraînement (13) et coulissant dans un cylindre de distribution (17) est monté solidaire en rotation avec l'arbre d'entraînement (13), piston (17) qui limite par une rainure annulaire (26) le côté tourné à l'opposé du piston de la pompe (20) de la chambre de travail de la pompe (25), en ce que dans la rainure annulaire (26) débouche une rainure de distribution (27) qui relie une pluralité d'alésages d'injection (30) débouchant à l'intérieur du cylindre de distribution (17) dans un plan transversal, et conduisant chacun à un injecteur, successivement à la rainure annulaire (26), en ce que le piston de distribution (16) porte une deuxième rainure annulaire (29) reliée par une rainure de liaison axiale (28)) à la rainure annulaire (26), rainure (29) qui recouvre deux orifices disposés à l'intérieur du cylindre de distribution (17), le premier de ces orifices étant relié par l'intermédiaire d'une canalisation d'évacuation (32) à la première soupape (41) et le deuxième de ces orifices étant relié à la chambre d'accumulation (46) ou par l'intermédiaire d'une deuxième canalisation d'évacuation (65, 66) à la deuxième soupape (41).

10. Pompe d'injection selon la revendication 9, caractérisée en ce que la chambre d'accumulation (46) est formée par un alésage radial (42) coaxial au deuxième orifice, dans un corps de carter (37), qui est vissé dans un alésage coaxial radial (33) dans le cylindre de distribution (17) et de préférence en ce que la deuxième soupape (41) est vissée dans le corps de carter (37).

11. Pompe d'injection selon la revendication 9, caractérisée en ce que la chambre d'accumulation (46) est fermée par un alésage radial (60), dans le cylindre de distribution (17), coaxial au deuxième orifice et en ce que la deuxième soupape (41) est vissée dans un alésage fileté (59) dans le carter de la pompe (11) coaxial à l'alésage radial (60).

Fig.1

Fig.2

Fig. 3

Fig.5

Fig.4

EP 0 322 426 B1

14

Fig.6